# EUROPÄISCHE PATENTANMELDUNG

(11) **EP 4 477 446 A1**
(43) Veröffentlichungstag der Anmeldung: **18.12.2024**
(21) Anmeldenummer: 24175863.0
(22) Anmeldetag: 15.05.2024
(51) Int. Cl.: B60K 35/10, B60K 35/25, B60K 35/50, B60K 35/55, G09B 21/00

(54) **EINGABEVORRICHTUNG ZUM EINGEBEN EINES BEFEHLS**

(30) Priorität: 24.05.2023 DE 102023204820
(71) Anmelder: Robert Bosch GmbH, 70442 Stuttgart (DE)
(72) Erfinder: Holz, Rainer, 71672 Marbach (DE); Woelke, Florian, 70839 Gerlingen (DE); Hupfer, Renate, 71263 Weil Der Stadt (DE); Kesel, Ingo, 71665 Vaihingen (DE); Scheiner, Philipp, 71263 Weil Der Stadt (DE)

(57) **Zusammenfassung**

Vorgeschlagen wird eine Eingabevorrichtung (20) zum Eingeben eines Befehls, mit einem ein Bedienelement (22) mit einer einem Nutzer zugewandten, ersten Oberfläche (24) und eine der ersten Oberfläche (24) gegenüberliegende, dem Nutzer abgewandte, zweite Oberfläche (25), mit einen Aktor (26) zum Bewegen des Bedienelements (22) zwischen einer Ausgangsposition und einer Endposition, mit einem Aufnahmeelement (28) mit einer dem Nutzer zugewandten Oberfläche (27) zum Aufnehmen des Bedienelements (22) und des Aktors (26), wobei die erste Oberfläche (24) des Bedienelements (22) in der Endposition gegenüber dem Aufnahmeelement (28) herausgefahren oder abgesenkt ist. Die Eingabevorrichtung (20) umfasst eine elastische Schicht (30), wobei die elastische Schicht (30) an dem Aufnahmeelement (28) derart angeordnet ist, dass zumindest ein Teil des Bedienelements (22) mit der elastischen Schicht (30) bedeckt ist, und in der Ausgangsposition eine ebene Fläche ausbildet und beim Bewegen des Bedienelements (22) in die Endposition verformbar ist. Der Aktor (26) ist ausgebildet zum Ausführen einer Bewegung in eine horizontale Richtung (34). Die zweite Oberfläche (25) des Bedienelements (22) ist bezüglich der ersten Oberfläche (24) des Bedienelements (22) und/oder bezüglich der dem Nutzer zugewandten Oberfläche (27) des Aufnahmeelements (28) derart schräg angeordnet, dass mittels der horizontalen Bewegung (34) des Aktors (26) das Bedienelement (22) in eine vertikale Richtung (36) bewegbar ist.

## Beschreibung

### Stand der Technik

Aus der DE 10 2018 103 350 A1 ist ein Bedienelement für einen Fahrzeuginnenraum bekannt.

### Offenbarung der Erfindung

Vorgeschlagen wird eine Eingabevorrichtung zum Eingeben eines Befehls, wobei die Eingabevorrichtung ein Bedienelement mit einer einem Nutzer zugewandten, ersten Oberfläche und eine der ersten Oberfläche gegenüberliegende, dem Nutzer abgewandte, zweite Oberfläche aufweist. Die Eingabevorrichtung weist ferner einen Aktor auf zum Bewegen des Bedienelements zwischen einer Ausgangsposition und einer Endposition. Weiterhin weist die Eingabevorrichtung ein Aufnahmeelement mit einer dem Nutzer zugewandten Oberfläche auf zum Aufnehmen des Bedienelements und des Aktors, wobei die dem Nutzer zugewandte Oberfläche des Aufnahmeelements und die erste Oberfläche des Bedienelements in der Ausgangsposition auf einer Ebene angeordnet sind und wobei die erste Oberfläche des Bedienelements in der Endposition gegenüber dem Aufnahmeelement herausgefahren oder abgesenkt ist. Die Eingabevorrichtung weist weiterhin eine elastische Schicht auf, wobei die elastische Schicht an dem Aufnahmeelement auf einer einem Nutzer zugewandte Seite derart angeordnet ist, dass zumindest ein Teil des Bedienelements mit der elastischen Schicht bedeckt ist. Ferner bildet die elastische Schicht in der Ausgangsposition eine ebene Fläche aus, wobei die elastische Schicht beim Bewegen des Bedienelements in die Endposition verformbar ist. Ferner ist der Aktor ausgebildet zum Ausführen einer Bewegung in eine horizontale Richtung, wobei die die horizontale Richtung ungefähr parallel zu der dem Nutzer zugewandten Oberfläche des Aufnahmeelements und/oder zu der ersten Oberfläche des Bedienelements ausgebildet ist. Die zweite Oberfläche des Bedienelements ist bezüglich der ersten Oberfläche des Bedienelements und/oder bezüglich der dem Nutzer zugewandten Oberfläche des Aufnahmeelements derart schräg angeordnet, dass mittels der Ausführen der Bewegung in die horizontale Richtung mittels des Aktors das Bedienelement in eine vertikale Richtung bewegbar ist, wobei die vertikale Richtung ungefähr senkrecht zu der horizontalen Richtung und/oder senkrecht zu der dem Nutzer zugewandten Oberfläche des Aufnahmeelements ausgebildet ist.

Der Vorteil liegt darin, dass mittels der vorgeschlagenen Eingabevorrichtung eine Bedienung einer oder mehrerer Funktionen, beispielsweise in einem Fahrzeug, ermöglicht wird. Beispielsweise können mittels der vorgeschlagenen Eingabevorrichtung ein oder mehrere Displays in einem Fahrzeug angesteuert werden. Die Eingabevorrichtung wird insbesondere dann sichtbar, wenn diese gebraucht wird. Vorzugsweise wird die Eingabevorrichtung bzw. das Bedienelement dann herausgefahren oder abgesenkt und kann insbesondere einen Befehl aufnehmen, sofern dies notwendig und/oder von einem Benutzer gewollt ist. Hierdurch kann der Nutzer nicht durch zu viele Elemente auf einer Bedienoberfläche abgelenkt werden. Wird die Eingabevorrichtung in einem Fahrzeug angeordnet, kann der Nutzer beispielsweise ein Fahrzeuginsasse, zum Beispiel ein Fahrer, sein. Hierdurch kann der Fahrzeuginsasse bzw. der Fahrer nicht durch zu viele Elemente in dem Fahrzeuginnenraum abgelenkt werden, wodurch die Sicherheit im Straßenverkehr erhöht werden kann. Weiterhin können durch das Verschwinden des Bedienelements bei Nichtgebrauch Verletzungen, beispielsweise durch ein Anstoßen oder ein Hängenbleiben an der Eingabevorrichtung reduziert werden. Ein weiterer Vorteil liegt darin, dass die Oberfläche, unter welcher die Eingabevorrichtung angeordnet ist, leichter gereinigt werden kann, da insbesondere kein Staub, Schmutzpartikel und/oder Wasser bzw. Feuchtigkeit in Ritzen und/oder eine Mechanik der Vorrichtung eindringen kann.

Vorteilhafterweise ist die horizontale Richtung parallel zu der dem Nutzer zugewandten Oberfläche des Aufnahmeelements und/oder zu der ersten Oberfläche des Bedienelements ausgebildet. Vorteilhafterweise ist die vertikale Richtung senkrecht zu der der dem Nutzer zugewandten Oberfläche des Aufnahmeelements ausgebildet. Vorzugsweise ist der Aktor ausgebildet zum Ausführen einer Bewegung parallel zu der dem Nutzer zugewandten Oberfläche des Aufnahmeelements und/oder zu der ersten Oberfläche des Bedienelements. Hierdurch ergibt sich eine Bewegung des Bedienelements senkrecht zu der dem Nutzer zugewandten Oberfläche des Aufnahmeelements.

Vorteilhafterweise kann mittels der Eingabevorrichtung Bauraum eingespart werden. Durch die horizontale Ausrichtung des Aktors kann insbesondere eine Bauraumreduktion in Richtung der Interaktionsachse des Bedienelements, insbesondere in Richtung der Z-Achse, ermöglicht werden. Hierdurch ergibt sich ein hoher Freiheitsgrad und eine flexible Einbaumöglichkeit der Eingabevorrichtung in Bereichen mit knappem Bauraum. Ferner können hierdurch unterschiedliche Arten des Aktors ermöglicht werden. Ein weiterer Vorteil liegt darin, dass ein Herausmorphen aus der Oberfläche und ein Hineinmorphen in die Oberfläche ermöglicht wird.

In einer beispielhaften Ausführung kann der Aktor quer zu einer Interaktionsachse des Bedienelements abgeordnet sein. Hierdurch kann insbesondere Bauraum eingespart werden, wodurch die Eingabevorrichtung auch in Bereichen mit knappem Bauraum eingesetzt werden kann.

Vorteilhafterweise kann die schräg angeordnete zweite Oberfläche des Bedienelements als schiefe Ebene ausgebildet ist. In einer Weiterentwicklung kann der Aktor einen Schieber mit einer Rolle aufweisen, wobei der Schieber in eine horizontale Richtung bewegbar ist und wobei die Rolle über die schräg angeordnete zweite Oberfläche des Bedienelements abrollbar ist. In einer vorteilhaften Ausführung kann der Schieber mit der Rolle zum Herausfahren des Bedienelements drückbar sein, wobei der Schieber mit der Rolle zum Absenken des Bedienelements ziehbar ist. Hierdurch kann ein Bewegen des Bedienelements insbesondere sicher und/oder zuverlässig durchgeführt werden, wodurch insbesondere eine Funktionalität des Bedienelements und somit der Eingabevorrichtung sichergestellt werden kann.

In einer vorteilhaften Ausgestaltung kann die Eingabevorrichtung eine Feder umfassen, wobei die Feder mit einem ersten Ende an der zweiten Oberfläche des Bedienelements angeordnet ist und mit einem zweiten Ende an einem dem Bedienelement und dem Nutzer zugewandten Bereich des Aufnahmeelements angeordnet ist. Hierdurch kann eine Rückstellung des Bedienelements in die Ausgangsposition ermöglicht werden, wodurch insbesondere eine Funktionalität des Bedienelements und somit der Eingabevorrichtung sichergestellt werden kann.

In einer beispielhaften Ausführung ist mittels eines Bewegens des Bedienelements ein Befehl ermittelbar. Vorteilhafterweise ist das Bedienelement zum Betätigen des Bedienelements in eine vertikale Richtung bewegbar ist. Hierdurch kann ein Befehl, welcher mittels des Bedienelements und somit der Eingabevorrichtung getätigt werden soll, insbesondere sicher und/oder zuverlässig erkannt werden. Hierdurch kann eine entsprechende Aktion auf den Befehl durchgeführt werden.

In einer Weiterentwicklung kann die elastische Schicht an dem Aufnahmeelement befestigt sein. Beispielsweise kann die elastische Schicht mittels einer stoffschlüssigen Verbindung an dem Aufnahmeelement befestigt sein. In einer vorteilhaften Ausführung kann die elastische Schicht mittels einer Klebeverbindung an dem Aufnahmeelement befestigt sein. Mittels der Befestigung kann gewährleistet werden, dass die elastische Schicht als ebene Fläche in der Ausgangsposition ausgebildet ist. Ferner kann gewährleistet werden, dass sich die elastische Schicht in der Endposition derart verformt, dass sich diese an das Bedienelement bzw. an die Form des Bedienelements anpasst. Hierdurch kann für einen Benutzer das Bedienelement, insbesondere in der vorgegebenen Form, plastisch hervorgehoben werden. Hierdurch kann die Funktionalität der Eingabevorrichtung gewährleistet werden. Ferner kann ermöglicht werden, dass die elastische Schicht nicht verrutscht. Durch die elastische Ausführung der Schicht kann insbesondere eine vorherige ebene Fläche nach der Verformung durch das Bedienelement wiederhergestellt werden.

Vorteilhafterweise kann der über dem Bedienelement angeordnete Bereich der elastischen Schicht als berührungsempfindliche Schicht ausgebildet sein. Hierdurch kann ein Nutzer insbesondere sicher und/oder zuverlässig Befehle über die berührungsempfindliche Schicht eingeben.

In einer Weiterentwicklung kann die Eingabevorrichtung einen Sensor aufweisen zum Erkennen eines Annäherns eines Nutzers der Eingabevorrichtung, wobei das Bedienelement in die Endposition bewegt wird, wenn mittels des Sensors ein Annähern des Nutzers erkannt wird. Weiterhin kann die Eingabevorrichtung insbesondere einen Sensor aufweisen zum Erkennen eines Entfernens eines Nutzers der Eingabevorrichtung, wobei das Bedienelement in die Ausgangsposition bewegt wird, wenn mittels des Sensors ein Entfernen des Nutzers erkannt wird. Hierdurch kann erkannt werden, wenn ein Nutzer die Eingabevorrichtung verwenden will, wobei das Bedienelement dann in die Endposition bewegt bzw. gefahren wird, sofern ein Annähern eines Nutzers erkannt wird. Anschließend nach der Benutzung und/oder wenn ein Nutzer sich von der Eingabevorrichtung entfernt, kann das Bedienelement wieder in die Ausgangsposition zurückbewegt bzw. zurückgefahren werden. Hierdurch kann das Bedienelement bei Bedarf verfügbar sein, wodurch insbesondere eine Ablenkung des Nutzers verhindert wird, sofern dieser das Bedienelement nicht benötigt. Ist die Eingabevorrichtung in einem Fahrzeug angeordnet, so wird durch die reduzierte Ablenkung des Nutzers, insbesondere eines Fahrzeuginsassen bzw. eines Fahrers, die Sicherheit im Straßenverkehr erhöht.

Weiterhin vorgeschlagen wird ein Verfahren zum Bewegen eines Bedienelements einer Eingabevorrichtung, mit den Schritten,
Bewegen des Aktors in eine horizontale Richtung, wobei mittels des Bewegens des Aktors in eine horizontale Richtung das Bedienelement in eine vertikale Richtung von der Ausgangsposition in die Endposition bewegt wird, wobei die elastische Schicht beim Bewegen des Bedienelements in die Endposition verformt wird.

In einer Weiterentwicklung weist das Verfahren einen Schritt des Erkennens eines Annäherns eines Nutzers mittels eines Sensors aus, wobei das Bedienelement dann in die Endposition bewegt wird, wenn mittels des Sensors ein Annähern des Nutzers erkannt wird. Weiterhin kann das Verfahren einen Schritt des Erkennens eines Entfernens eines Nutzers mittels eines Sensors aufweisen, wobei das Bedienelement dann in die Ausgangsposition zurückbewegt wird, wenn mittels des Sensors ein Entfernen des Nutzers erkannt wird. Hierdurch kann das Bedienelement bei Bedarf verfügbar sein, wodurch insbesondere die Sicherheit im Straßenverkehr erhöht werden kann.

Ferner wird ein Verfahren zum Eingeben eines Befehls mittels einer Eingabevorrichtung vorgeschlagen, mit den Schritten,
Bewegen des Aktors in eine horizontale Richtung, wobei mittels des Bewegens des Aktors in eine horizontale Richtung das Bedienelement in eine vertikale Richtung von der Ausgangsposition in die Endposition bewegt wird, wobei die elastische Schicht beim Bewegen des Bedienelements in die Endposition verformt wird,
Erfassen einer Eingabe eines Befehls durch eine von einem Nutzer ausgeführte Bewegung des Bedienelements und/oder mittels einer berührungsempfindlichen Oberfläche des Bedienelements und/oder der elastischen Schicht.

### Kurze Beschreibung der Zeichnungen

Ausführungsbeispiele der Erfindung sind in den Zeichnungen dargestellt und in den nachfolgenden Beschreibungen näher erläutert. Für die in den verschiedenen Figuren dargestellten und ähnlich wirkenden Elemente werden gleiche Bezugszeichen verwendet, wobei auf eine wiederholte Beschreibung der Elemente verzichtet wird. Es zeigen:
Fig. 1 eine schematische Darstellung einer Eingabevorrichtung gemäß einem Ausführungsbeispiel der vorliegenden Erfindung;
Fig. 2 eine schematische Darstellung einer Eingabevorrichtung gemäß einem Ausführungsbeispiel der vorliegenden Erfindung;
Fig. 3 eine schematische Darstellung einer Eingabevorrichtung gemäß einem Ausführungsbeispiel der vorliegenden Erfindung;
Fig. 4 eine schematische Darstellung einer Draufsicht eines Fahrzeugs gemäß einem Ausführungsbeispiel der vorliegenden Erfindung;
Fig. 5 eine schematische Darstellung eines Verfahrens gemäß einem Ausführungsbeispiel der vorliegenden Erfindung;
Fig. 6 eine schematische Darstellung eines Verfahrens gemäß einem Ausführungsbeispiel der vorliegenden Erfindung;
Fig. 7 eine schematische Darstellung eines Verfahrens gemäß einem Ausführungsbeispiel der vorliegenden Erfindung.

### Ausführungsformen der Erfindung:

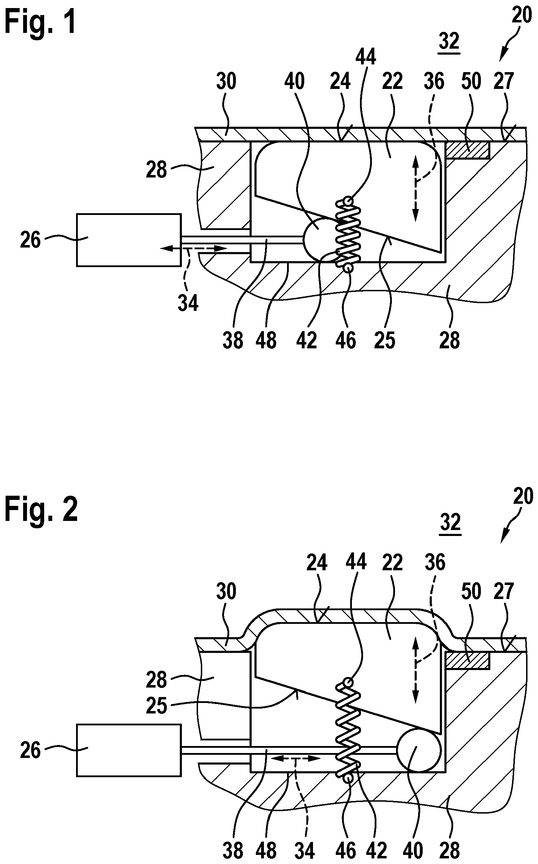

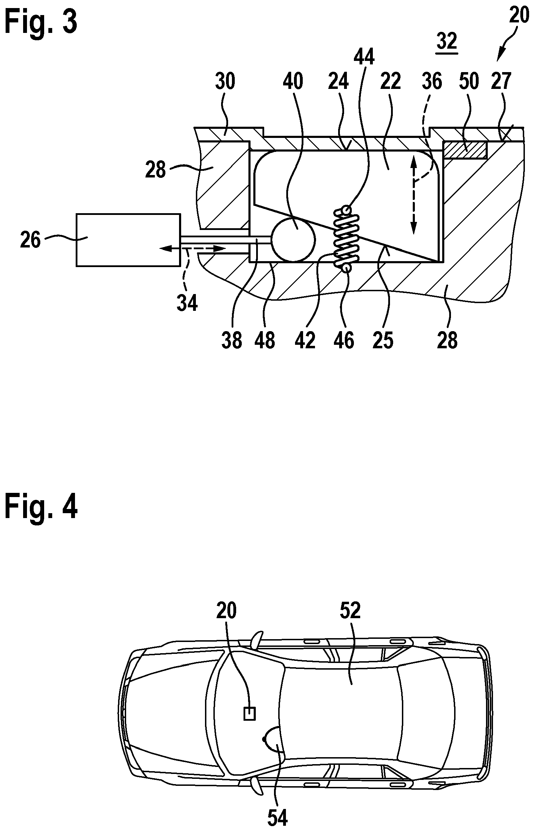

Fig. 1 zeigt eine schematische Darstellung einer Eingabevorrichtung 20. Die Eingabevorrichtung 20 ist ausgebildet zum Eingeben eines Befehls. Die Eingabevorrichtung 20 kann zum Beispiel in einem Fahrzeug angeordnet sein, beispielsweise gemäß Fig. 4.

Die Eingabevorrichtung 20 weist ein Bedienelement 22 mit einer einem Nutzer zugewandten, ersten Oberfläche 24 und eine der ersten Oberfläche 24 gegenüberliegende, dem Nutzer abgewandte, zweite Oberfläche 25 auf. Das Bedienelement 22 kann insbesondere von einer Blickrichtung des Nutzers ausgesehen beispielsweise rund, oval, rechteckig oder rechteckig mit abgerundeten Ecken ausgebildet sein. Die Eingabevorrichtung 20 weist einen Aktor 26 auf zum Bewegen des Bedienelements 22 zwischen einer Ausgangsposition und einer Endposition. Das Bedienelement 22 kann senkrecht zur Bedienoberfläche bewegt bzw. verfahren werden. In dieser vorteilhaften Ausführung gemäß Fig. 1 ist das Bedienelement 22 in der Ausgangsposition angeordnet bzw. dargestellt. Der Aktor 24 kann beispielsweise als Linearmotor, als Pneumatik-Aktor und/oder als Magnet-Aktor ausgebildet sein. Mit anderen Worten kann der Aktor 26 beispielsweise als elektrischer, hydraulischer, pneumatischer, magnetischer Aktor 26 ausgebildet sein. Mit anderen Worten bewegt der Aktor 26 das Bedienelement 22 zwischen verschiedenen Positionen, vorzugsweise der Ausgangsposition und der Endposition hin und her. Die Bewegung kann in zwei Stufen, mehreren Stufen und/oder kontinuierlich durchgeführt werden. Mit anderen Worten kann mittels des Aktors 26 das Bedienelement 22 von der Ausgangsposition in die Endposition gefahren bzw. bewegt werden und wieder zurück. Die Anordnung des Bedienelements 22 in der Endposition kann gemäß Fig. 2 ausgebildet sein.

Die Eingabevorrichtung 20 weist ferner ein Aufnahmeelement 28 mit einer dem Nutzer zugewandten Oberfläche 27 auf zum Aufnehmen des Bedienelements 22 und des Aktors 26, wobei die dem Nutzer zugewandte Oberfläche 27 des Aufnahmeelements 28 und die erste Oberfläche 24 des Bedienelements 22 in der Ausgangsposition auf einer Ebene angeordnet sind und wobei die erste Oberfläche 24 des Bedienelements 22 in der Endposition gegenüber dem Aufnahmeelement 28 herausgefahren bzw. angehoben oder abgesenkt ist. Mit anderen Worten ist das Bedienelement 22 in der Ausgangsposition in dem Aufnahmeelement 28 bzw. innerhalb des Aufnahmeelements 28 angeordnet. Insbesondere verschwindet das Bedienelement 22 somit innerhalb des Aufnahmeelements 28. Hierdurch ergibt sich in der Ausgangsposition keine Auswölbung durch das Bedienelement 22 aus dem Aufnahmeelement 28 heraus. Das Aufnahmeelement 28 kann beispielsweise als Gehäuse oder Träger ausgebildet sein, wobei das Gehäuse oder der Träger insbesondere das Bedienelement 22 und den Aktor 26 aufnimmt. In einer beispielhaften Ausführung kann das Aufnahmeelement 28 ein Teil eines Armaturenbretts, einer Ablage und/oder einer Armlehne, insbesondere einer Mittelkonsole, eines Fahrzeugs sein oder in bzw. an einem Armaturenbrett, einer Ablage und/oder Armlehne, insbesondere in einer Mittelkonsole, eines Fahrzeugs angeordnet sein.

Weiterhin weist die Eingabevorrichtung 20 eine elastische Schicht 30 auf, wobei die elastische Schicht 30 an dem Aufnahmeelement 28 auf einer dem Nutzer zugewandte Seite 32 derart angeordnet ist, dass zumindest ein Teil des Bedienelements 22 mit der elastischen Schicht 30 bedeckt ist. Die elastische Schicht 30 bildet in der Ausgangsposition eine ebene Fläche aus. Mit anderen Worten ist die elastische Schicht 30 in der Ausgangsposition eben, sodass keine Auswölbung mittels der elastischen Schicht 30 durch das Bedienelement 22 gebildet ist bzw. wird. Somit ist die elastische Schicht 30 in der Ausgangsposition unverformt bzw. nicht durch das Bedienelement 22 verformt. Vorzugsweise kann die elastische Schicht 30 in der Ausgangslage über dem Bedienelement 22 in einem unverformten Zustand gespannt sein. Vorzugsweise ist hierdurch das Bedienelement 22 in der Ausgangsposition für einen Nutzer unsichtbar bzw. nicht sichtbar. Die elastische Schicht 30 kann beim Bewegen des Bedienelements 22 in die Endposition verformbar ausgebildet sein. Eine Verformung kann beispielsweise in der Endposition des Bedienelements 22 gemäß Fig. 2 ausgebildet sein. Bei einem Zurückbewegen des Bedienelements 22 von der Endposition in die Ausgangsposition kann sich die elastisch verformbare Schicht 30 insbesondere zurück verformen. Ein elastisches Verformen der elastischen Schicht 30 kann insbesondere eine Dehnung der elastischen Schicht 30 sein.

In einer vorteilhaften Ausführung ist die elastische Schicht 30 an dem Aufnahmeelement 28 befestigt. Insbesondere ist die elastische Schicht 30 an einer dem Nutzer zugewandten Seite 32 des Aufnahmeelements 28 befestigt. Beispielsweise kann die elastische Schicht 30 mittels einer stoffschlüssigen Verbindung an dem Aufnahmeelement 28 befestigt sein. Die stoffschlüssige Verbindung kann beispielsweise als Klebeverbindung ausgebildet sein. Hierdurch kann die elastische Schicht 30 insbesondere mittels einer Klebeverbindung an dem Aufnahmeelement 28 befestigt sein. Gleichermaßen kann die elastische Schicht 30 in einer Weiterentwicklung zumindest teilweise an dem Bedienelement 22 befestigt sein.

Der Aktor 26 ist ausgebildet zum Ausführen einer Bewegung in eine horizontale Richtung 34. Vorteilhafterweise ist die horizontale Richtung parallel zu der dem Nutzer zugewandten Oberfläche des Aufnahmeelements und/oder zu der ersten Oberfläche des Bedienelements ausgebildet. Mit anderen Worten ist der Aktor 26 ausgebildet zum Ausführen einer Bewegung in die horizontale Richtung 34 entlang des Pfeils 34. Mit anderen Worten ist der Aktor 26 senkrecht bzw. in einem Winkel von 90 Grad zu einer Bewegungsrichtung des Bedienelements 22 angeordnet. Mit anderen Worten ist der Aktor 26 ausgebildet zum Ausführen einer Bewegung parallel zu der der dem Nutzer zugewandten Oberfläche 27 des Aufnahmeelements 28 und/oder zu der ersten Oberfläche 24 des Bedienelements 22. Hierdurch ergibt sich eine Bewegung des Bedienelements senkrecht zu der der dem Nutzer zugewandten Oberfläche 27 des Aufnahmeelements 28.

Die zweite Oberfläche 25 des Bedienelements 22 ist bezüglich der ersten Oberfläche 24 des Bedienelements 22 und/oder bezüglich der dem Nutzer zugewandten Oberfläche 27 des Aufnahmeelements 28 derart schräg angeordnet, dass mittels der Bewegung in eine horizontale Richtung 34 mittels des Aktors 26 bzw. mittels der horizontalen Bewegung des Aktors 26 das Bedienelement 22 in eine vertikale Richtung 36 bewegbar ist. Vorteilhafterweise wird das Bedienelement 22 in eine vertikale Richtung 36 entlang des Pfeils 36 bewegt. Der Aktor 26 ist insbesondere quer zu einer Interaktionsachse 36 des Bedienelements 22 abgeordnet. Vorteilhafterweise kann die schräg angeordnete zweite Oberfläche 25 des Bedienelements 22 als schiefe Ebene ausgebildet sein. Mit anderen Worten ist die zweite Oberfläche 25 des Bedienelements 22 schief ausgebildet. Mit anderen Worten ist die zweite Oberfläche 24 des Bedienelements 22 in einem Winkel zu der ersten Oberfläche 24 des Bedienelements 22 angeordnet, somit nicht parallel zu der ersten Oberfläche 24 angeordnet. Vorteilhafterweise ist die zweite Oberfläche 24 des Bedienelements 24 nicht parallel zu der dem Nutzer zugewandte Oberfläche 27 des Aufnahmeelements 28 angeordnet.

In dieser vorteilhaften Ausführung weist der Aktor 26 einen Schieber 38 mit einer Rolle 40 auf, wobei der Schieber 38 in eine horizontale Richtung 34 bewegbar ist und wobei die Rolle 40 über die schräg angeordnete zweite Oberfläche 25 des Bedienelements 22 abrollbar ist. Die Rolle 40 kann auch als Kugelkopf ausgebildet sein. In einer Weiterentwicklung kann die Rolle 40 auch als Keil ausgebildet sein. Mit anderen Worten kann der Schieber 38 mit der Rolle 40 in die horizontale Richtung 34 entlang des Pfeils 34 bewegt werden. Hierbei kann die Rolle 40 insbesondere an der zweiten Oberfläche 25 und somit an der schiefen Ebene des Bedienelements 22 abrollen. Hierdurch ergibt sich eine vertikale Bewegung des Bedienelements 22 entlang des Pfeils 36. Der Schieber 38 kann zum Beispiel als Stab, Stift, Zylinder oder weiteres ausgebildet sein. Beispielsweise kann der Schieber länglich ausgebildet sein und als eine Verbindung zwischen Motor und Rolle 40 ausgebildet sein. Vorteilhafterweise weist der Schieber 38 an einem dem Motor gegenüberliegenden Ende ein Lager und die Rolle 40 auf.

Vorteilhafterweise ist der Schieber 38 mit der Rolle 40 zum Herausfahren des Bedienelements 22 drückbar und zum Absenken des Bedienelements 22 ziehbar. Mit anderen Worten wird der Schieber 38 zum Herausfahren des Bedienelements herausgedrückt bzw. herausgeschoben und zum Absenken des Bedienelements 22 zurückgezogen.

Anderen Worten kann zu einer vertikalen Bauraumreduktion, insbesondere in Richtung einer z-Achse und somit in Richtung der Bewegung des Bedienelements 22 entlang des Pfeils 36, des formveränderlichen Elementes, der Aktor 26 in horizontaler Richtung 34, insbesondere in Richtung einer x-Achse, angebracht sein. Mit anderen Worten liegt der Aktor 26 quer zur Interaktionsachse des Bedienelements 22 bzw. Buttons 22. Dabei wird das Bedienelement 22 weiterhin wie gewohnt in vertikaler Richtung 36, insbesondere in Richtung der z-Achse, in der Höhe verstellt. Die Richtungsumlenkung erfolgt über eine schiefe Ebene mittels Kugelkopfs oder mit einem Keil.

Der horizontal positionierte Aktor 26, insbesondere entlang der x-Achse, zieht oder drückt auf die schiefe Ebene, welche dadurch aufgrund ihrer Lagerung, beispielsweise ein Gleitlager, in vertikaler Richtung 36, insbesondere in Richtung der z-Achse, auf- oder absteigen kann. Die Erzeugung einer Linearbewegung kann beispielsweise mittels eines Linearmotors, Pneumatik-Aktors und/oder Magnet-Aktor erfolgen. Möglich ist sowohl die Formveränderung der Oberfläche in eine konkave Form, insbesondere durch Ziehen des Aktors 20, wodurch sich das Bedienelement 22 nach unten bewegt, in eine konvexe Form, insbesondere durch Drücken des Aktors, wodurch sich das Bedienelement 22 nach oben bewegt. Die Umlegung des Aktors 26 in die horizontale Richtung 36 verschafft neue Freiheitsgrade, wodurch Bauraum in z-Richtung 36 eingespart werden kann.

Die Eingabevorrichtung 20 umfasst in einer vorteilhaften Ausführung ferner eine Feder 42, wobei die Feder 42 mit einem ersten Ende 44 an dem Bedienelement 22 und/oder an der zweiten Oberfläche 25 des Bedienelements 22 angeordnet ist und mit einem zweiten Ende 46 an einem dem Bedienelement 22 und dem Nutzer zugewandten Bereich 48 des Aufnahmeelements 28 angeordnet ist. Mittels der Feder 42 wird das Bedienelement 22 in die Ausgangsposition zurückgezogen, wenn sich das Bedienelement 22 in der Endposition befindet. Das Zurückziehen des Bedienelements 22 Erfolg insbesondere dann, wenn sich der Aktor in die ursprüngliche Position zurückbewegt und somit der Schieber 38 mit der Rolle 40 zurückgezogen wird.

Vorteilhafterweise kann mittels eines Bewegens des Bedienelements 22 ein Befehl ermittelbar sein. Vorzugsweise kann ein auf das Bedienelement 22 aufgebrachter Druck als Befehl eines Nutzers interpretiert werden. Mit anderen Worten kann das Bedienelement 22 zum Betätigen in eine vertikale Richtung bewegbar sein. Mittels des Drucks auf das Bedienelement 22 kann insbesondere ein Befehl eingebbar sein. Mit anderen Worten kann ein Befehl mittels der Eingabevorrichtung 20 dadurch gegeben werden, dass Druck auf das Bedienelement 22 aufgebracht wird. Vorteilhafterweise kann dieser Druck gemessen werden. Als Sensor zur Detektion des vom Nutzer aufgebrachten Drucks kann beispielsweise ein klassischer Druckknopf, ein Drucksensor, ein Piezosensor, ein elektroaktives Polymer oder andere geeignete Sensoren verwendet werden bzw. zum Einsatz kommen. Alternativ oder zusätzlich der über dem Bedienelement 22 angeordnete Bereich der elastischen Schicht 30 als berührungsempfindliche Schicht ausgebildet sein. Vorzugseise kann mittels einer Berührung der berührungsempfindlichen Schicht eine Eingabe gemacht werden. Beispielsweise können berührungsempfindliche Textilfasern in die elastische Schicht 30 eingearbeitet werden.

Eine Funktion zum Eingeben eines Befehls kann insbesondere dann aktiviert sein, wenn das Bedienelement 22 in der Endposition angeordnet ist. Vorzugsweise kann eine Funktion zum Eingeben eines Befehls dann deaktiviert sein, wenn das Bedienelement 22 in der Ausgangsposition angeordnet ist. In einer alternativen Ausführungsform kann die Bedienung auch in der Ausgangsposition aktiviert sein. Hierbei kann auch in der Ausgangsposition ein Befehl eingegeben werden.

In einer Weiterentwicklung kann die Eingabevorrichtung 20 einen Sensor 50 aufweisen zum Erkennen eines Annäherns eines Nutzers an die Eingabevorrichtung 20. Mit anderen Worten kann mittels eines Sensors 50 ein Annähern eines Nutzers erkannt werden. Der Sensor 50 ist in dieser vorteilhaften Ausführung in bzw. an dem Aufnahmeelement 28 angeordnet. In einer Weiterentwicklung kann der Sensor 50 auch an einer anderen Position in der Eingabevorrichtung 20 angeordnet sein. Die Eingabevorrichtung 20 kann einen oder mehrere Sensoren 50 aufweisen, welche beispielsweise verteilt angeordnet sind, insbesondere um das Bedienelement 22 herum. Alternativ oder zusätzlich kann der Sensor 50 in bzw. an dem Bedienelement 22 angeordnet sein. Wenn mittels des Sensors 50 ein Annähern des Nutzers, insbesondere einer Hand oder eines oder mehrerer Finger, erkannt wird, dann wird das Bedienelement 22 mittels des Aktors in die Endposition bewegt. Der Sensor 50 kann weiterhin ausgebildet sein zum Erkennen eines Entfernens eines Nutzers von der Eingabevorrichtung 20. Mit anderen Worten kann mittels des Sensors 50 weiterhin ein Entfernen des Nutzers von dem Bedienelement 22 und somit von der Eingabevorrichtung 20 weg erfasst werden. Wenn mittels des Sensors 50 ein Entfernen des Nutzers erkannt wird, dann kann das Bedienelement 22 in die Ausgangsposition bewegt werden.

Mit anderen Worten kann eine Ansteuerung der Eingabevorrichtung 20 durch das System oder durch den Nutzer selbst, zum Beispiel durch Annäherung der Hand, ausgelöst werden. Beispielsweise können hierfür ein oder mehrere kapazitive Annäherungssensoren 50 in dem Aufnahmeelement 28, zum Beispiel um das Bedienelement 22 herum in der Nähe der elastischen Schicht 30, angeordnet sein, um eine Annäherung des Nutzers, beispielsweise eine Hand und/oder eines oder mehrere Finger des Nutzers, aus verschiedenen Richtungen zu detektieren. Alternativ oder zusätzlich kann der eine oder die mehreren Annäherungssensoren 50 als Radarsensor, Ultraschallsensor, kapazitiver Sensor und/oder optischer Sensor ausgebildet sein. Alternativ oder zusätzlich kann der Annäherungssensor 50 in die elastische Schicht 30 integriert sein.

Alternativ oder zusätzlich kann das Bewegen des Bedienelements 22 in die Endposition auch durch eine Funktion oder ein Eintreten einer bestimmten Situation ausgelöst werden. Beispielsweise kann das Bedienelement 22 in die Endposition bewegt werden, wenn von einem Nutzer eine bestimmte Eingabe gefordert wird, notwendig ist und/oder erwartet wird. Ist die Eingabevorrichtung 20 beispielsweise in einem Fahrzeug angeordnet, so kann das Bedienelement 22 in die Endposition bewegt werden, wenn vom Fahrzeuginsassen eine Eingabe gefordert wird, notwendig ist und/oder erwartet wird. Alternativ oder zusätzlich kann das System das Bedienelement 22 wieder zurück in die eingefahrene Position und somit die Ausgangsposition bewegen, wenn eine Eingabe erfolgt bzw. abschlossen ist, und/oder über einen definierten Zeitraum hinweg keine Eingabe vom Nutzer erfolgt ist und dementsprechend von einer nicht beabsichtigten Aktivierung ausgegangen werden kann.

In einer Weiterentwicklung kann die Eingabevorrichtung 20 eine Beleuchtungsvorrichtung bzw. eine Hintergrundbeleuchtung aufweisen. Beispielsweise kann mittels der Beleuchtungsvorrichtung das Bedienelement 22 und/oder der Bereich zwischen dem Bedienelement 22 dem Aufnahmeelement 28 beleuchtet werden. Die Beleuchtungsvorrichtung kann beispielsweise als LED, Lichtleiter oder Leuchtflächen ausgebildet sein. Alternativ oder zusätzlich kann eine Beleuchtung, zum Beispiel durch Leuchtfäden in der elastischen Schicht 30 angeordnet sein. Alternativ oder zusätzlich kann eine Beleuchtung, zum Beispiel durch Leuchtfäden in der flexiblen Schicht 36 angeordnet sein. Alternativ oder zusätzlich kann eine Beleuchtung in dem Aufnahmeelement 28 angeordnet sein.

Mit anderen Worten ist die Eingabevorrichtung 20 als Interaktionselement mit einer morphenden, also formveränderlichen Oberflächen ausgebildet.

Fig. 2 zeigt eine schematische Darstellung einer Eingabevorrichtung 20 gemäß einem Ausführungsbeispiel der vorliegenden Erfindung. Die Eingabevorrichtung 20 ist ausgebildet zum Eingeben eines Befehls. Die Eingabevorrichtung 20 kann zum Beispiel in einem Fahrzeug angeordnet sein, beispielsweise gemäß Fig. 4. Die Eingabevorrichtung 20 gemäß Fig. 2 ist gemäß der Eingabevorrichtung 20 gemäß Fig. 1 ausgebildet. Die Eingabevorrichtung 20 weist gemäß Fig. 1 das Bedienelement 22, den Aktor 26 zum Bewegen des Bedienelements 22 zwischen der Ausgangsposition und der Endposition, das Aufnahmeelement 28 und die elastische Schicht 30 auf.

Im Unterschied zu der Eingabevorrichtung 20 gemäß Fig. 1 ist die Eingabevorrichtung 20 gemäß Fig. 2 in der Endposition angeordnet. Das Bedienelement 22 ist in der Endposition herausgefahren, wodurch das Bedienelement 22 zumindest teilweise aus dem Aufnahmeelement 28 herausragt. Hierdurch ergibt sich in der Endposition eine Auswölbung durch das Bedienelement 22 aus dem Aufnahmeelement 28 heraus. Mit anderen Worten sind das Bedienelement 22 in der Endposition gegenüber dem Aufnahmeelement 28 herausgefahren bzw. angehoben. In einer alternativen Ausführungsform können das Bedienelement 22 in der Endposition gegenüber dem Aufnahmeelement 28 abgesenkt sein.

Der Aktor 26 hat in dieser vorteilhaften Ausführung eine horizontale Bewegung in horizontale Richtung 34, insbesondere entlang des Pfeils 34, ausgeführt. Die zweite Oberfläche 25 des Bedienelements 22 ist bezüglich der ersten Oberfläche 24 des Bedienelements 22 und/oder bezüglich der dem Nutzer zugewandten Oberfläche 27 des Aufnahmeelements 28 derart schräg angeordnet, dass durch die horizontale Bewegung des Aktors 26 das Bedienelement 22 in eine vertikale Richtung 36 bewegt wird. Vorteilhafterweise wird das Bedienelement 22 in eine vertikale Richtung 36 entlang des Pfeils 36 bewegt. Die Rolle 40 befindet sich nun in der Endposition an einem dickeren Ende des Bedienelements 22 im Vergleich zu der Ausgangsposition des Bedienelements 22.

Vorzugsweise liegt die elastische Schicht 30 in der Endposition auf der Oberfläche zumindest eines Teils des Bedienelements 22 auf. Mit anderen Worten ist die elastische Schicht 30 auf einer einem Nutzer zugewandte Seite 32 derart angeordnet, dass zumindest ein Teil des Bedienelements 22 mit der elastischen Schicht 30 bedeckt ist. Mit anderen Worten schmiegt sich die elastische Schicht 30 an die Form des Bedienelements 22 an. Die elastische Schicht 30 bildet in der Endposition eine Auswölbung aus, wobei die Auswölbung insbesondere die Form des Bedienelements 22 annehmen kann. Mit anderen Worten ist die elastische Schicht 30 in der Endposition verformt, sodass eine Auswölbung durch das Bedienelement 22 gebildet ist. Vorzugsweise ist hierdurch die Form des Bedienelements 22 in der Endposition für einen Nutzer durch die elastische Schicht 30 hindurch sichtbar.

Eine Funktion zum Eingeben eines Befehls mittels der Eingabevorrichtung 20 kann insbesondere dann aktiviert sein, wenn das Bedienelement 22 in der Endposition angeordnet ist. Mit anderen Worten ist die Funktion zum Betätigen einer Eingabe gemäß Fig. 2 aktiviert, da sich das Bedienelement 22 in der Endposition befindet.

Vorzugsweise kann ein auf das Bedienelement 22 aufgebrachter Druck gemessen werden. Mittels des Drucks auf das Bedienelement 22 kann insbesondere ein Befehl eingebbar sein. Mit anderen Worten kann ein Befehl mittels der Eingabevorrichtung dadurch gegeben werden, dass Druck auf das Bedienelement 22 aufgebracht wird. Vorteilhafterweise kann dieser Druck gemessen werden. Als Sensor zur Detektion des vom Nutzer aufgebrachten Drucks kann beispielsweise ein klassischer Druckknopf, ein Drucksensor, ein Piezosensor, ein elektroaktives Polymer oder andere geeignete Sensoren verwendet werden bzw. zum Einsatz kommen.

In einer Weiterentwicklung kann die Eingabevorrichtung 20 einen Sensor 50 gemäß Fig. 1 aufweisen zum Erkennen eines Annäherns eines Nutzers an die Eingabevorrichtung 20. Mit anderen Worten kann mittels eines Sensors 50 ein Annähern eines Nutzers erkannt werden. Wenn mittels des Sensors 50 ein Annähern des Nutzers, insbesondere einer Hand, eines oder mehrerer Finger, erkannt wird, dann wird das Bedienelement 22 mittels des Aktors in die Endposition bewegt. Der Sensor 50 kann weiterhin ausgebildet sein zum Erkennen eines Entfernens eines Nutzers von der Eingabevorrichtung 20. Mit anderen Worten kann mittels des Sensors 50 weiterhin ein Entfernen des Nutzers von dem Bedienelement 22 und somit von der Eingabevorrichtung 20 weg erfasst werden. Wenn mittels des Sensors 50 ein Entfernen des Nutzers erkannt wird, dann kann das Bedienelement 22 in die Ausgangsposition zurückbewegt werden. Alternativ oder zusätzlich kann das Bedienelement 22 dann in die Endposition bewegt werden, wenn eine Eingabe von einem Nutzer erwartet wird.

Mit anderen Worten kann die Eingabevorrichtung 20 als Druckknopf ausgebildet sein, welcher sich in der Endposition aus dem Aufnahmeelement 28 herausbildet, wenn eine Bedienung durch einen Nutzer nötig oder gewünscht wird. In der Ausgangssituation ist der Bereich, in welchem der Druckknopf bzw. die Eingabevorrichtung 20 angeordnet ist, eine ebene Fläche.

Mit anderen Worten basiert die Eingabevorrichtung 20 auf einer flexiblen Oberfläche bzw. elastischen Schicht 30, die durch darunterliegende mechanisch verstellbare Elemente bzw. den Aktor 26 die Form eines runden, rechteckigen, ovalen Elements hier des Bedienelements 22 annehmen kann, welches äußerlich einem herkömmlichen Druckknopfe gleichen kann. Diese Verformung wird elektronisch angetrieben und findet situativ statt, wenn die Anpassung von Fahrzeugeinstellungen oder die Navigation im Bediensystem des Fahrzeugs durch eine Eingabevorrichtung 20 vereinfacht werden soll. Die beschriebene Verformung kann manuell durch den Nutzer über ein haptisches Signal, Gestik oder Sprache, oder automatisch durch einen Annäherungssensor 50 eingeleitet werden. Die Eingabevorrichtung 20 kann durch Druck bedient werden. Bei leichtem Druck auf die Oberfläche kann eine Eingabe bestätigt werden.

Mit anderen Worten legt eine Ausformung bzw. ein Morphen des Bedienelements 22 aus der Oberfläche heraus einen Aktor 26 unterhalb der zu verformenden Oberfläche bzw. der elastischen Schicht 30 zugrunde, der das entsprechend geformte Bedienelemente 22 nach oben schieben kann und dabei die elastische Schicht 30 verformt. Die elastische Schicht 30 kann beispielsweise als Dekorschicht ausgebildet sein, zum Beispiel als textiler Bezug, Kunstleder oder andere geeignete Materialien.

In einer Weiterentwicklung kann das Bedienelement 22 ein haptisches Feedback geben. Beispielsweise kann das Bedienelement 22 vibrieren, insbesondere in unterschiedlichen Vibrationsmustern.

Die elastische Schicht 30 muss entsprechend elastisch ausgeführt sein und eine ausreichende Rückstellkraft aufweisen, um den gewünschten Verformungsgrad, insbesondere abhängig von den Dimensionen des Bedienelements 22 und dem Verfahrweg des Bedienelements 22, schadfrei abbilden zu können und bei Einfahren des Bedienelements 22 wieder eine glatte, faltenfreie Oberfläche zu bilden. Der Aktor 26 für die Auf-und-Ab-Bewegung des Bedienelements 22 kann auf vielfältige Weise und je nach Anforderung, insbesondere in Abhängigkeit der aufzubringenden Kraft, die zur Verformung des Oberflächenmaterials nötig ist, des verfügbaren Bauraums, der gewünschten Bewegungsverläufe, der Geräuschentwicklung und/oder weitere, umgesetzt werden. Beispielhaft kann der Aktor 26 als ein elektromechanischer, pneumatischer, hydraulischer, elektromagnetischer oder sonstiger Aktor ausgebildet sein. Beispielsweise kann der Aktor 26 als ein elektromechanischer Stellmotor ausgebildet sein.

In einer alternativen Ausführungsform kann der über dem Bedienelement 22 angeordnete Bereich der elastischen Schicht 30 als berührungsempfindliche Schicht ausgebildet sein. Vorzugseise kann mittels einer Berührung der berührungsempfindlichen Schicht eine Eingabe gemacht werden. Beispielsweise können berührungsempfindliche Textilfasern in die elastische Schicht 30 eingearbeitet werden.

Fig. 3 zeigt eine schematische Darstellung einer Eingabevorrichtung 20 gemäß einem Ausführungsbeispiel der vorliegenden Erfindung. Die Eingabevorrichtung 20 ist ausgebildet zum Eingeben eines Befehls. Die Eingabevorrichtung 20 kann zum Beispiel in einem Fahrzeug angeordnet sein, beispielsweise gemäß Fig. 4. Die Eingabevorrichtung 20 gemäß Fig. 3 ist gemäß der Eingabevorrichtung 20 gemäß Fig. 1 und/oder Fig. 2 ausgebildet. Die Eingabevorrichtung 20 weist somit gemäß der Eingabevorrichtung 20 gemäß Fig. 1 das Bedienelement 22, den Aktor 26 zum Bewegen des Bedienelements 22 zwischen der Ausgangsposition und der Endposition, das Aufnahmeelement 28 und die elastische Schicht 30 auf.

Im Unterschied zu der Eingabevorrichtung 20 gemäß Fig. 1 ist die Eingabevorrichtung 20 gemäß Fig. 3 in der Endposition angeordnet. Im Unterschied zu der Eingabevorrichtung 20 gemäß Fig. 2 ist die Eingabevorrichtung 20 gemäß Fig. 3 in der Endposition abgesenkt angeordnet. Das Bedienelement 22 ist in der Endposition abgesenkt, wodurch das Bedienelement 22 zumindest teilweise in dem Aufnahmeelement 28 verschwindet. Hierdurch ergibt sich in der Endposition eine Kuhle bzw. Aushöhlung durch das Bedienelement 22 in das Aufnahmeelement 28 hinein. Mit anderen Worten sind das Bedienelement 22 in der Endposition gegenüber dem Aufnahmeelement 28 abgesenkt.

Der Aktor 26 hat in dieser vorteilhaften Ausführung eine horizontale Bewegung in horizontale Richtung 34, insbesondere entlang des Pfeils 34, hier in Richtung zu dem Aktor 26 hin, ausgeführt. Die zweite Oberfläche 25 des Bedienelements 22 ist bezüglich der ersten Oberfläche 24 des Bedienelements 22 und/oder bezüglich der dem Nutzer zugewandten Oberfläche 27 des Aufnahmeelements 28 derart schräg angeordnet, dass durch die horizontale Bewegung des Aktors 26 das Bedienelement 22 in eine vertikale Richtung 36 bewegt wird. Vorteilhafterweise wird das Bedienelement 22 in eine vertikale Richtung 36 entlang des Pfeils 36 bewegt. Die Rolle 40 befindet sich nun in der Endposition an einem schmaleren Ende des Bedienelements 22 im Vergleich zu der Ausgangsposition des Bedienelements 22.

Fig. 4 zeigt eine schematische Darstellung einer Draufsicht eines Fahrzeugs 52, beispielsweise eines Kraftfahrzeugs, beispielsweise eines Autos, mit einer Eingabevorrichtung 20. Die Eingabevorrichtung 20 kann zum Beispiel in einem Fahrzeug 52 angeordnet sein. Die Eingabevorrichtung 20 gemäß Fig. 4 kann gemäß der Eingabevorrichtung 20 gemäß Fig. 1 und/oder Fig. 2 ausgebildet sein. Die Eingabevorrichtung 20 kann an bzw. in einem Armaturenbrett, einer Armlehne und/oder einer Ablage, beispielsweise in einer Mittelkonsole, des Fahrzeugs 52 angeordnet sein. Vorzugsweise kann das Aufnahmeelement Teil eines Armaturenbretts, einer Armlehne und/oder einer Ablage, beispielsweise einer Mittelkonsole, des Fahrzeugs 52 sein oder in bzw. an einem Armaturenbrett, einer Armlehne und/oder einer Ablage, beispielsweise in einer Mittelkonsole, des Fahrzeugs 52 angeordnet sein. Die Eingabevorrichtung 20 ist derart angeordnet, dass ein Nutzer 54, insbesondere ein Fahrzeuginsasse 54, zum Beispiel ein Fahrer oder Beifahrer, diese mit der Hand erreichen und somit einen Befehl eingeben kann.

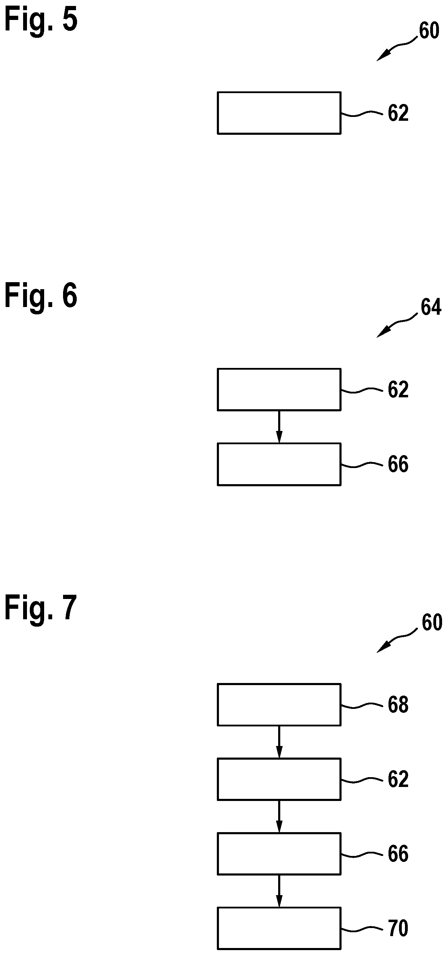

Fig. 5 zeigt eine schematische Darstellung eines Verfahrens 60 zum Bewegen eines Bedienelements einer Eingabevorrichtung zum Eingeben eines Befehls gemäß einem Ausführungsbeispiel der vorliegenden Erfindung. Die Eingabevorrichtung kann gemäß Fig. 1 und/oder Fig. 2 ausgebildet sein. Die Eingabevorrichtung kann gemäß Fig. 4 in einem Fahrzeug angeordnet sein.

In einem ersten Schritt 62 des Verfahrens 60 wird der Aktor in eine horizontale Richtung bewegt, wobei mittels des Bewegens des Aktors in die horizontale Richtung das Bedienelement in eine vertikale Richtung von der Ausgangsposition in die Endposition bewegt wird. Die elastische Schicht wird beim Bewegen des Bedienelements in die Endposition verformt. Die Ausgangsposition kann beispielsweise gemäß Fig. 1 ausgebildet sein. Die Endposition kann beispielsweise gemäß Fig. 2 ausgebildet sein.

Das Bedienelement kann anschließend in die Ausgangsposition zurückbewegt werden.

Fig. 6 zeigt eine schematische Darstellung eines Verfahrens 64 zum Eingeben eines Befehls mittels einer Eingabevorrichtung gemäß einem Ausführungsbeispiel der vorliegenden Erfindung. Die Eingabevorrichtung kann gemäß Fig. 1 und/oder Fig. 2 ausgebildet sein. Die Eingabevorrichtung kann gemäß Fig. 4 in einem Fahrzeug angeordnet sein. Das Verfahren 64 gemäß Fig. 6 kann die Schritte des Verfahrens gemäß Fig. 5, somit den ersten Schritt 62, aufweisen.

Das Verfahren 64 gemäß Fig. 6 weist einen weiteren, zweiten Schritt 66 auf. In dem zweiten Schritt 66 des Verfahrens 64 wird eine Eingabe eines Befehls durch eine von einem Nutzer ausgeführte Bewegung des Bedienelements und/oder mittels einer berührungsempfindlichen Oberfläche des Bedienelements und/oder der elastischen Schicht erfasst. Dieser Schritt kann ausgeführt werden, bevor das Bedienelement in die Ausgangsposition zurückbewegt wird. Der Befehl ist beispielsweise mittels eines Drucks auf das Bedienelement eingebbar. Vorzugsweise kann ein Druck auf das Bedienelement erfasst und insbesondere als Befehl interpretiert werden.

Fig. 7 zeigt eine schematische Darstellung eines Verfahrens 60 zum Bewegen eines Bedienelements einer Eingabevorrichtung zum Eingeben eines Befehls gemäß einem Ausführungsbeispiel der vorliegenden Erfindung. Die Eingabevorrichtung kann gemäß Fig. 1 und/oder Fig. 2 ausgebildet sein. Die Eingabevorrichtung kann gemäß Fig. 4 in einem Fahrzeug angeordnet sein. Das Verfahren gemäß Fig. 7 kann die Schritte des Verfahrens gemäß Fig. 5 und/oder Fig. 6, somit den ersten Schritt 62 und insbesondere den zweiten Schritt 66, aufweisen.

Das Verfahren 60 gemäß Fig. 7 weist einen weiteren, dritten Schritt 68 auf. In dem dritten Schritt 68 des Verfahrens 60, welcher vor dem ersten Schritt 62 ausgeführt wird, wird ein Annähern eines Nutzers mittels eines Sensors erkannt. Der Sensor kann gemäß dem Sensor gemäß Fig. 1 und/oder Fig. 2 ausgebildet sein.

Das Bedienelement wird anschließend, wenn mittels des Sensors ein Annähern des Nutzers erkannt wird, in dem ersten Schritt 62 des Verfahrens 60 mittels des Aktors von der Ausgangsposition in die Endposition bewegt, wobei die elastische Schicht beim Bewegen des Bedienelements in die Endposition verformt wird.

In einem zweiten Schritt 66 des Verfahrens 60 wird eine Eingabe eines Befehls erfasst.

Das Verfahren 60 gemäß Fig. 7 weist einen weiteren, vierten Schritt 70 auf. In dem vierten Schritt 70 des Verfahrens 60 wird ein Entfernen eines Nutzers mittels eines Sensors erkannt.

Das Bedienelement kann anschließend, wenn mittels des Sensors ein Entfernen des Nutzers erkannt wird, in die Ausgangsposition zurückbewegt werden. Dies kann beispielsweise in einem weiteren Schritt durchgeführt werden oder zusammen mit dem vierten Schritt 70.

## Patentansprüche

1. Eingabevorrichtung (20) zum Eingeben eines Befehls, **dadurch gekennzeichnet,**
**dass** die Eingabevorrichtung (20) ein Bedienelement (22) mit einer einem Nutzer zugewandten, ersten Oberfläche (24) und eine der ersten Oberfläche (24) gegenüberliegende, dem Nutzer abgewandte, zweite Oberfläche (25) aufweist,
**dass** die Eingabevorrichtung (20) einen Aktor (26) aufweist zum Bewegen des Bedienelements (22) zwischen einer Ausgangsposition und einer Endposition,
**dass** die Eingabevorrichtung (20) ein Aufnahmeelement (28) mit einer dem Nutzer zugewandten Oberfläche (27) aufweist zum Aufnehmen des Bedienelements (22) und des Aktors (26), wobei die dem Nutzer zugewandte Oberfläche (27) des Aufnahmeelements (28) und die erste Oberfläche (24) des Bedienelements (22) in der Ausgangsposition auf einer Ebene angeordnet sind und wobei die erste Oberfläche (24) des Bedienelements (22) in der Endposition gegenüber dem Aufnahmeelement (28) herausgefahren oder abgesenkt ist,
**dass** die Eingabevorrichtung (20) eine elastische Schicht (30) aufweist, wobei die elastische Schicht (30) an dem Aufnahmeelement (28) auf einer einem Nutzer zugewandte Seite (32) derart angeordnet ist, dass zumindest ein Teil des Bedienelements (22) mit der elastischen Schicht (30) bedeckt ist,
**dass** die elastische Schicht (30) in der Ausgangsposition eine ebene Fläche ausbildet und wobei die elastische Schicht (30) beim Bewegen des Bedienelements (22) in die Endposition verformbar ist,
**dass** der Aktor (26) ausgebildet ist zum Ausführen einer Bewegung in eine horizontale Richtung (34), wobei die die horizontale Richtung (34) ungefähr parallel zu der dem Nutzer zugewandten Oberfläche (27) des Aufnahmeelements (28) und/oder zu der ersten Oberfläche (24) des Bedienelements (22) ausgebildet ist,
**dass** die zweite Oberfläche (25) des Bedienelements (22) bezüglich der ersten Oberfläche (24) des Bedienelements (22) und/oder bezüglich der dem Nutzer zugewandten Oberfläche (27) des Aufnahmeelements (28) derart schräg angeordnet ist, dass mittels der Ausführen der Bewegung in die horizontale Richtung (34) mittels des Aktors (26) das Bedienelement (22) in eine vertikale Richtung (36) bewegbar ist, wobei die vertikale Richtung (36) ungefähr senkrecht zu der horizontalen Richtung (34) und/oder senkrecht zu der dem Nutzer zugewandten Oberfläche (27) des Aufnahmeelements (28) ausgebildet ist.

2. Eingabevorrichtung (20) nach Anspruch 1, **dadurch gekennzeichnet, dass** der Aktor (26) quer zu einer Interaktionsachse des Bedienelements (22) abgeordnet ist.

3. Eingabevorrichtung (20) nach einem der vorherigen Ansprüche, **dadurch gekennzeichnet, dass** die schräg angeordnete zweite Oberfläche (25) des Bedienelements (22) als schiefe Ebene ausgebildet ist.

4. Eingabevorrichtung (20) nach einem der vorherigen Ansprüche, **dadurch gekennzeichnet, dass** der Aktor (26) einen Schieber (38) mit einer Rolle (40) aufweist, wobei der Schieber (38) in eine horizontale Richtung (34) bewegbar ist und wobei die Rolle (40) über die schräg angeordnete zweite Oberfläche (25) des Bedienelements (22) abrollbar ist.

5. Eingabevorrichtung (20) nach Anspruch 4, **dadurch gekennzeichnet, dass** der Schieber (38) mit der Rolle (40) zum Herausfahren des Bedienelements (22) drückbar ist und dass der Schieber (38) mit der Rolle (40) zum Absenken des Bedienelements (22) ziehbar ist.

6. Eingabevorrichtung (20) nach einem der vorherigen Ansprüche, **dadurch gekennzeichnet, dass** die Eingabevorrichtung (20) eine Feder (42) umfasst, wobei die Feder (42) mit einem ersten Ende an der zweiten Oberfläche (25) des Bedienelements (22) angeordnet ist und mit einem zweiten Ende an einem dem Bedienelement (22) und dem Nutzer zugewandten Bereich (48) des Aufnahmeelements (28) angeordnet ist.

7. Eingabevorrichtung (20) nach einem der vorherigen Ansprüche, **dadurch gekennzeichnet, dass** mittels eines Bewegens des Bedienelements (22) ein Befehl ermittelbar ist.

8. Eingabevorrichtung (20) nach einem der vorherigen Ansprüche, **dadurch gekennzeichnet, dass** das Bedienelement (22) zum Betätigen des Bedienelements (22) in eine vertikale Richtung (36) bewegbar ist.

9. Eingabevorrichtung (20) nach einem der vorherigen Ansprüche, **dadurch gekennzeichnet, dass** der über dem Bedienelement (22) angeordnete Bereich der elastischen Schicht (30) als berührungsempfindliche Schicht ausgebildet ist.

10. Eingabevorrichtung (20) nach einem der vorherigen Ansprüche, **dadurch gekennzeichnet, dass** die Eingabevorrichtung (20) einen Sensor (50) aufweist zum Erkennen eines Annäherns eines Nutzers der Eingabevorrichtung (20), wobei das Bedienelement (22) in die Endposition bewegt wird, wenn mittels des Sensors (50) ein Annähern des Nutzers erkannt wird.

11. Eingabevorrichtung (20) nach einem der vorherigen Ansprüche, **dadurch gekennzeichnet, dass** die Eingabevorrichtung (20) einen Sensor (50) aufweist zum Erkennen eines Entfernens eines Nutzers der Eingabevorrichtung (20), wobei das Bedienelement (22) in die Ausgangsposition bewegt wird, wenn mittels des Sensors (50) ein Entfernen des Nutzers erkannt wird.

12. Verfahren (60) zum Bewegen eines Bedienelements (22) einer Eingabevorrichtung (20) nach einem der vorherigen Ansprüche, mit den Schritten,
Bewegen des Aktors (26) in eine horizontale Richtung (34), wobei mittels des Bewegens des Aktors (26) in eine horizontale Richtung (34) das Bedienelement (22) in eine vertikale Richtung (36) von der Ausgangsposition in die Endposition bewegt wird, wobei die elastische Schicht (30) beim Bewegen des Bedienelements (22) in die Endposition verformt wird.

13. Verfahren (60) nach Anspruch 12, mit einem Schritt des Erkennens eines Annäherns eines Nutzers mittels eines Sensors (50), wobei das Bedienelement (22) dann in die Endposition bewegt wird, wenn mittels des Sensors (50) ein Annähern des Nutzers erkannt wird.

14. Verfahren (60) nach einem der vorherigen Ansprüche 12 bis 13, mit einem Schritt des Erkennens eines Entfernens eines Nutzers mittels eines Sensors (50), wobei das Bedienelement (22) dann in die Ausgangsposition zurückbewegt wird, wenn mittels des Sensors (50) ein Entfernen des Nutzers erkannt wird.

15. Verfahren (64) zum Eingeben eines Befehls mittels einer Eingabevorrichtung (20) nach einem der vorherigen Ansprüche 1 bis 11, mit den Schritten,
Bewegen des Aktors (26) in eine horizontale Richtung (34), wobei mittels des Bewegens des Aktors (26) in eine horizontale Richtung (34) das Bedienelement (22) in eine vertikale Richtung (36) von der Ausgangsposition in die Endposition bewegt wird, wobei die elastische Schicht (30) beim Bewegen des Bedienelements (22) in die Endposition verformt wird,
Erfassen einer Eingabe eines Befehls durch eine von einem Nutzer ausgeführte Bewegung des Bedienelements (22) und/oder mittels einer berührungsempfindlichen Oberfläche (24) des Bedienelements (22) und/oder der elastischen Schicht (30).
